# EUROPÄISCHE PATENTSCHRIFT

(11) **EP 0 727 272 B1**
(45) Veröffentlichungstag und Bekanntmachung des Hinweises auf die Patenterteilung: **09.06.1999**
(21) Anmeldenummer: 96101719.1
(22) Anmeldetag: 07.02.1996
(51) Int. Cl.: B23K 11/14

(54) **Verfahren zum elektrischen Verschweissen von zwei Metallteilen**
Process for welding two metallic parts together
Procédé pour le soudage électrique de deux pièces métalliques entre elles

(30) Priorität: 15.02.1995 DE 19505015; 27.02.1995 DE 29503271 U
(43) Veröffentlichungstag der Anmeldung: 21.08.1996
(73) Patentinhaber: Boller, Günter, 35708 Haiger-Fellerdilln (DE)
(72) Erfinder: Moos, Uwe, 57299 Burbach (DE)

(56) Entgegenhaltungen:
- EP-A- 0 521 640
- DE-A- 3 605 115
- DE-A- 3 921 119
- GB-A- 2 068 814
- US-A- 2 385 991
- US-A- 2 846 701
- PATENT ABSTRACTS OF JAPAN vol. 6, no. 150 (M-148), 10.August 1982 & JP-A-57 070090 (MAZDA MOTOR CORP), 30.April 1982,
- MACHINE DESIGN, Bd. 60, Nr. 13, 9.Juni 1988, CLEVELAND US, Seiten 147-148, XP002002448 FEDERICO STRASSER: "DESIGNING SHAPES FOR PROJECTION WELDING"

## Beschreibung

Die Erfindung betrifft ein Verfahren zum elektrischen Verschweißen von zwei Metallteilen.

Zum Stand der Technik gehören verfahren zum Verschweißen von Schweißbolzen und Flachsteckern mit Werkstücken. Diese Teile werden auf das Werkstück aufgelegt. Anschließend wird das Schweißgerät mit einer Elektrode auf den Anschweißbolzen oder den Flachstecker aufgesetzt, und der Anschweißbolzen oder Flachstecker wird Punkt für Punkt an dem Werkstück festgeschweißt.

Zum einen werden nach dem Stand der Technik Bolzen mittels Hubzündung mit dem Werkstück verschweißt. Hierzu wird der Bolzen beispielsweise zusammen mit einem Keramikring auf das Werkstück aufgesetzt. Durch Auslösen des Schweißvorganges hebt sich der Bolzen vom Grundmaterial ab und zieht den Lichtbogen, der das Bolzenende und das Grundmaterial aufschmilzt (Schweißbad). Nach Ablauf der Schweißzeit taucht der Bolzen durch gesteuerten Druck in das Schweißbad ein. Nach dem Erstarren sind beide Materialien homogen verschweißt. Der Keramikring konzentriert beim Schweißvorgang den Lichtbogen, hält die Atmosphäre ab und formt einen Schweißwulst ringförmig um den Bolzen.

Zum Stand der Technik gehört weiterhin das Verfahren des Bolzenschweißens mit Spitzenzündung.

Bei diesem verfahren erfolgt das Verschweißen des Bolzens durch die direkte Entladung einer Kondensatorenbatterie mit hoher Kapazität. Der durch die Entladung der Kondensatoren entstehende Lichtbogen konzentriert sich auf die Zündspitze, die dadurch verdampft. Der Lichtbogen schmilzt in der Folge die gesamte Flanschstirnfläche und die dem Bolzen gegenüberliegende Zone des Werkstückes auf. Die Vorwärtsbewegung des Bolzens bei diesem Vorgang erfolgt bis zum Aufschlag auf das Werkstück. Der Lichtbogen erlischt. Die Kondensatoren sind jetzt vollkommen entladen. Bolzen und Werkstück vereinigen sich in einer festen Schweißverbindung. Die Brenndauer des Lichtbogens beträgt hierbei ein bis drei Millisekunden. Bei Handschweißpistolen wird die Vorwärtsbewegung des Bolzens durch Federdruck mechanisch ausgelöst.

Bei diesen Verfahren werden nur Bolzen mit einer Zündspitze verwendet. Bei größeren Kleinteilen, die verschweißt werden sollen, wird eine Punktverschweißung mit mehreren Schweißpunkten vorgenommen.

Das Verfahren der Punktverschweißung hat den Nachteil, daß zum einen bei mehreren Schweißpunkten der Verschweißvorgang relativ aufwendig ist, da jeder Punkt neu angesetzt werden muß und anschließend der Vorgang des Verschweißens erfolgt. Darüber hinaus hat dieses Verfahren den Nachteil, daß auf der Rückseite des Werkstückes die Verschweißpunkte sichtbar sind, so daß hier eine Nachbearbeitung notwendig ist. Es kann sogar vorkommen, daß beim Schweißen das Werkstück sich verformt. Das Werkstück muß dann nachbearbeitet werden.

Weiterer Nachteil der zum Stand der Technik gehörenden Verfahren ist, daß der Vorgang des Verschweißens sehr energieaufwendig ist. Beispielsweise wird mit einem Strom von 200 Ampere bei einer Spannung von 220 Volt mit einer Schweißzeit von 2/100 Sekunden gearbeitet.

Gemäß der DE-A-3921119 ist ein Verfahren zum elektrischen Verschweißen von zwei Metallteilen bekannt, bei dem das anzuschweißende Teil mehrere Schweißbuckel aufweist. Die Schweißbuckel werden auf das Werkstück aufgelegt, und der zum Schweißen erforderliche Strom fließt gleichzeitig durch die mehreren Schweißbuckel, derart, daß die Schweißbuckel in gleichem Maße schmelzen. Bei diesem Verfahren handelt es sich um das Widerstandspreßschweißen, welches den Nachteil hat, daß bei der Verwendung von üblicherweise 380 Volt sehr viel Energie benötigt wird. Darüber hinaus treten die Nachteile auf, daß sich die Trägerplatte auf der Rückseite verfärbt. Die Nachteile des Verfahrens des Punktschweißens, welches auch als Widerstandsschweißen bezeichnet wird, sind oben schon aufgeführt.

Das der Erfindung zugrunde liegende technische Problem besteht darin, ein Verfahren zum Verschweißen von zwei Teilen anzugeben, das zum einen kostengünstig arbeitet aufgrund hoher Energieeinsparung und zum anderen ein schnelles Anschweißen von beliebigen Kleinteilen erlaubt.

Das vorliegende technische Problem wird durch die Merkmale des Anspruches 1 gelöst.

Dadurch, daß das anzuschweißende Teil (1) wenigstens zwei Schweißspitzen aufweist, kann dieses auf das Werkstück aufgelegt werden, und der zum Schweißen erforderliche Strom fließt gleichzeitig durch die wenigstens zwei Schweißspitzen.

Die anzuschweißenden Kleinteile weisen je nach Größe der Kleinteile zwei oder mehrere Schweißspitzen auf, so daß nach dem Anschweißen an das Werkstück eine feste Schweißverbindung vorhanden ist.

Ein Vorteil des erfindungsgemäßen Verfahrens ist, daß jegliche Nachbearbeitung entfällt, wie zum Beispiel das Schleifen oder Polieren der Rückseite des Werkstückes, da sich das Werkstück beim Schweißvorgang nicht mehr verformt.

Darüber hinaus wird eine erhebliche Zeitersparnis erreicht, da in einem Arbeitsgang mehrere Punkte verschweißt werden, je nachdem wieviele Schweißspitzen ein Kleinteil aufweisen soll, je nach der gewünschten Belastbarkeit.

Beispielsweise werden in Schaltschränken Limbach-Muttern installiert. Derzeit werden für die Anbringung von acht Muttern circa acht Minuten benötigt. Hinzu kommt noch die Zeit für das Schleifen und das Polieren.

Bei Anwendung des erfindungsgemäßen Verfahrens können 13 bis 15 Minuten bei einer Gesamtarbeitszeit von 35 bis 40 Minuten eingespart werden, so daß hier eine erhebliche Zeitersparnis vorliegt.

Bei dem erfindungsgemäßen Verfahren wird eine Energieeinsparung von über 90% erreicht, da die bisher angewendete Punktverschweißung einen wesentlich höheren Energiebedarf hat.

Weiterer Vorteil der Erfindung ist, daß das für das erfindungsgemäße Verfahren benötigte Schweißgerät lediglich zehn bis elf Kilogramm wiegt und somit relativ handlich ist. Bei der Punktverschweißung nach dem Stand der Technik hingegen wird ein sehr großes Schweißgerät benötigt.

Durch die Handlichkeit des Schweißgerätes ist es darüber hinaus möglich, das Schweißgerät in eine CNC-Maschine (Computer Numerical Control; numerische Steuerung der Maschine) zu integrieren und das Verschweißen vollautomatisiert durchzuführen.

Vorteilhaft sind die Schweißspitzen auf einem scheibenförmigen Abbrandteil vorgesehen. Durch die scheibenförmige Ausbildung wird ein gleichmäßiger und idealer Stromfluß durch die Zündspitze erreicht.

Dadurch, daß beim Herstellen der Schweißspitzen ein Stift durch das Material des Kleinteiles gedrückt wird, ist der Schweißspitzen innen zumindest teilweise hohl ausgebildet.

Wird der Schweißspitzen auf einem scheibenförmigen Abbrandteil vorgesehen, so ist auch dieses Abbrandteil innen hohl, also ringförmig ausgebildet.

Dadurch, daß die Schweißspitzen mittels eines Stiftes, der sich in und durch das Material des Kleinteiles drückt, ausgebildet werden, können die Schweißspitzen bei einem sich an den normalen Herstellungsgang anschließenden Herstellungsschritt in dem Kleinteil angebracht werden. Hierzu ist bei der Werkzeugherstellung lediglich ein Folgewerkzeug nötig, das die Schweißspitzen herstellt.

Vorteilhaft werden die Kleinteile mittels eines Stempels gegen die Stifte gedrückt. Die Stifte sind vorteilhaft in ihrer Höhe verstellbar, so daß sich alle Stifte exakt gleich tief in die zu bearbeitenden Kleinteile eindrücken.

Als besonders vorteilhaft haben sich Schweißspitzen mit folgenden Abmessungen erwiesen:

| Blechstärke | Höhe der Schweißspitze | ⌀ der Schweißspitze an der Grundfläche | Größe des Kleinteiles |
|---|---|---|---|
| 2,0 mm | 0,6 mm | 0,8 mm | bis 50 cm² |
| 1,5 mm | 0,3 mm | 0,6 mm | bis 50 cm² |
| 1,75 mm | 0,5 mm | 0,8 mm | bis 50 cm² |
| 2,50 mm | 0,6 mm | 1,0 mm | bis 50 cm² |
| 1,0 mm | 0,4 mm | 0,4 mm | > 50 cm² |
| 2,25 mm | 0,6 mm | 1,0 mm | > 50 cm² |
| 2,0 mm | 0,5 mm | 1,5 mm | > 50 cm² |
| 1,0 mm | 0,5 mm | 1,0 mm | > 50 cm² |
| 2,0 mm | 1,0 mm | 1,0 mm | > 50 cm² |

Die Anzahl, Form und die Abmessungen der Zündspitzen richten sich nach der Größe der Fläche, die befestigt werden soll. Darüber hinaus richten sich die Abmessungen der Zündspitzen nach der Blechdicke und nach der gewünschten Belastbarkeit.

Weitere Einzelheiten der Erfindung können den Unteransprüchen entnommen werden.

Auf der Zeichnung ist ein Ausführungsbeispiel der Erfindung dargestellt, und zwar zeigen:
- Fig. 1: ein Kleinteil in Draufsicht;
- Fig. 2: einen Schnitt nach der Linie II-II der Fig. 1;
- Fig. 3: ein geändertes Ausführungsbeispiel;
- Fig. 4: einen Schnitt nach der Linie IV-IV der Fig. 3;
- Fig. 5: ein geändertes Ausführungsbeispiel;
- Fig. 6: ein geändertes Ausführungsbeispiel;
- Fig. 7: einen Schnitt durch ein Schweißgerät;
- Fig. 8: einen Schnitt durch eine Vorrichtung zur Erzeugung der Schweißspitzen;
- Fig. 9: ein geändertes Ausführungsbeispiel;
- Fig. 10: einen Schnitt durch eine geänderte Vorrichtung zur Herstellung der Schweißspitzen.

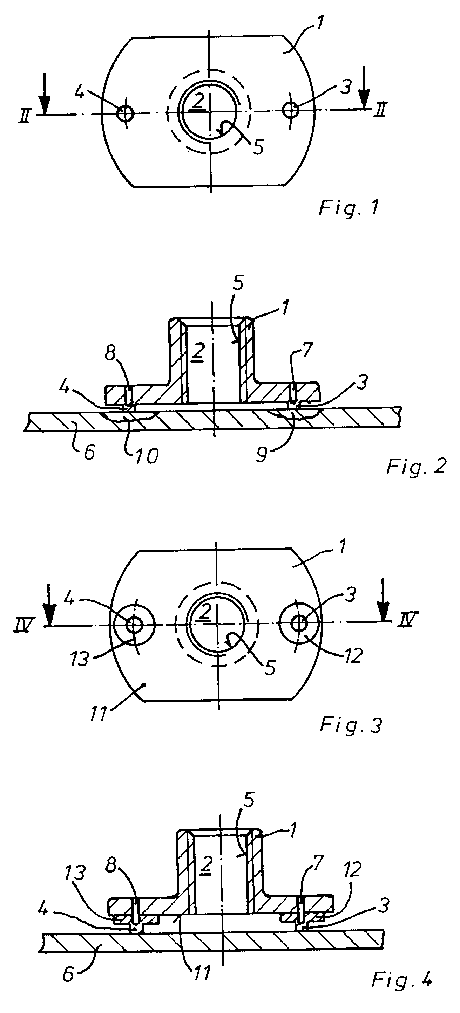

Fig. 1 zeigt eine Limbach-Mutter (1) mit einer Öffnung (2) und einem Innengewinde (5) zum Einschrauben einer Schraube (nicht dargestellt). Die Limbach-Mutter (1) weist Schweißspitzen (3, 4) auf.

Gemäß Fig. 2 wird die Limbach-Mutter mit den Schweißspitzen (3, 4) auf ein Werkstück (6) aufgesetzt. Die Schweißspitzen (3, 4) sowie das den Schweißspitzen (3, 4) gegenüberliegende Material schmelzen beim Verschweißvorgang des Werkstückes (6) in den Bereichen (9, 10) auf.

Auf die Limbach-Mutter (1) wird ein Druck von circa 25 Kilogramm ausgeübt. Die aufgeschmolzenen Bereiche verbinden sich, und nach Erkalten dieser Bereiche ist eine feste Schweißverbindung vorhanden.

Die Schweißspitzen (3, 4) werden durch Material der Limbach-Mutter (1) durch Kaltstauchen gebildet. Nach dem Kaltstauchen befinden sich Öffnungen (7, 8) in dem Material der Limbach-Mutter (1).

Gemäß Fig. 3 weist die Limbach-Mutter (1) zwischen der Grundfläche (11) der Limbach-Mutter (1) und den Schweißbuckeln (3, 4) Abbrandteile (12, 13) auf, durch die ein gleichmäßiger und idealer Stromfluß durch die Zündspitzen (3, 4) erreicht wird.

Fig. 4 zeigt die Limbach-Mutter (1), die mit den Schweißspitzen (3, 4) auf dem Werkstück (6) aufsitzt. Zwischen den Schweißspitzen (3, 4) und der Grundfläche (11) der Limbach-Mutter (1) sind die Abbrandteile (12, 13) vorgesehen. Die Öffnungen (7, 8) greifen durch die Abbrandteile (12, 13) bis in die Schweißspitzen (3, 4).

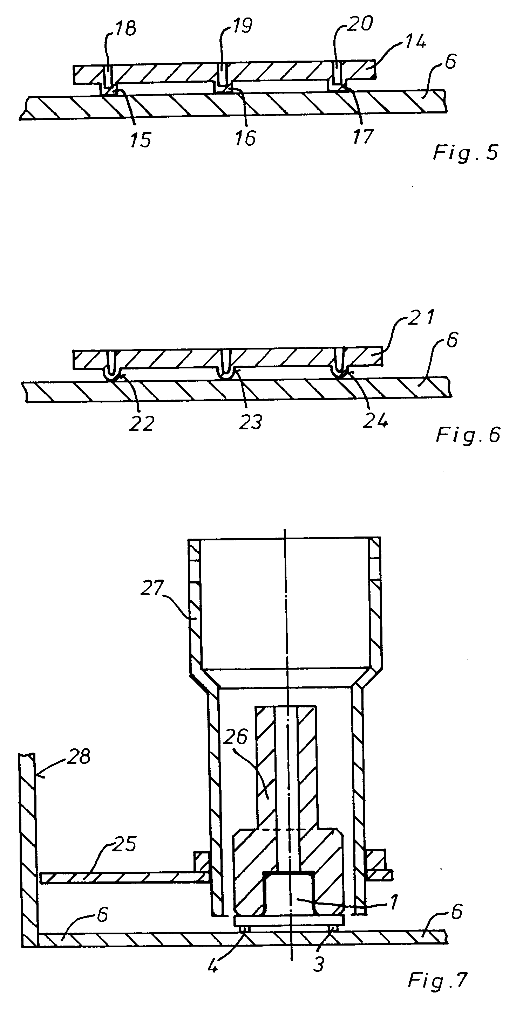

Fig. 5 zeigt ein Schweißteil (14) mit drei Schweißspitzen (15, 16, 17). Die Schweißspitzen sind zylinderförmig ausgebildet und sitzen auf dem Werkstück (6) auf. Das Schweißteil (14) weist Öffnungen (18, 19, 20) auf, die durch das Stauchen des Materials des Schweißteiles (14) zu den Schweißspitzen (15, 16, 17) entstanden sind.

Fig. 6 zeigt ein Schweißteil (21), das Schweißspitzen (22, 23, 24) aufweist. Die Schweißspitzen (22, 23, 24) sind an ihren auf dem Werkstück (6) aufsitzenden Enden halbkugelförmig ausgebildet.

Fig. 7 zeigt die Limbach-Mutter (1), die mit den Schweißspitzen (3, 4) auf dem Werkstück (6) (Schaltschrank) aufsitzt. Um die Limbach-Mutter greift mit Abstand eine Hülse (27), die einen Messingeinsatz (26) aufweist. Der Messingeinsatz (26) greift formschlüssig um die Limbach-Mutter herum. Die Hülse (27) wird mittels eines Abstandshalters (25) in definiertem Abstand von der Schrankwand (28) angesetzt.

Während des Verschweißvorganges wird ein Stromstoß durch den Messingeinsatz (26) geführt, so daß die Schweißspitzen (3, 4) sowie das den Schweißspitzen (3, 4) gegenüberliegende Material des Werkstückes (6) aufschmilzt und nach Durchführen des gesamten Stromstoßes durch die Schweißspitzen (3, 4) eine feste Schweißverbindung zwischen der Limbach-Mutter (1) und dem Werkstück (6) erreicht wird.

Der Messingeinsatz (26) ist der Form der Limbach-Mutter angepaßt.

Bei Verwendung anderer Kleinteile wird ein entsprechender Messing- oder Kupfereinsatz verwendet.

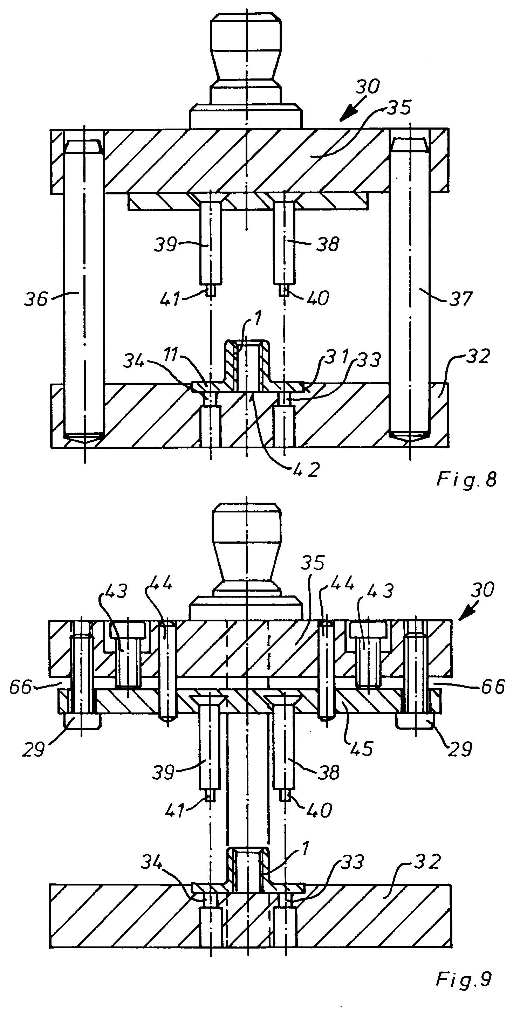

Fig. 8 zeigt ein Werkzeug (30) zur Bildung der Schweißspitzen in der Limbach-Mutter (1). Die Limbach-Mutter (1) sitzt hierzu in einer Ausnehmung (31) der Grundplatte (32) des Werkzeuges (30).

Das Werkzeug (30) weist einen Stempel (35) auf, der mittels Führungen (36, 37) senkrecht nach unten geführt werden kann.

Der Stempel (35) trägt Stifte (38, 39). Die Stifte (38, 39) tragen wiederum Stifte (40, 41) als Spitzen mit geringerem Durchmesser.

Wird der Stempel (35) senkrecht nach unten bewegt, so werden die Stifte (40, 41) in die Grundfläche (11) der Limbach-Mutter (1) gedrückt, und das Material der Grundfläche (11) der Limbach-Mutter (1) staucht sich zusammen, derart, daß es sich auf der Unterseite der Limbach-Mutter (1) hervordrückt.

Damit das Material der Grundfläche (11) der Limbach-Mutter (1) sich auf der Unterseite (42) der Limbach-Mutter (1) herausdrücken kann, sind in der Grundplatte (32) des Werkzeuges (30) Öffnungen (33, 34) vorgesehen, welche einen etwas größeren Durchmesser als die Stifte (40, 41) aufweisen.

Nach dem Eindrücken der Stifte (40, 41) in die Grundplatte (11) der Limbach-Mutter (1) wird der Stempel (35) mittels der Führungen (36, 37) wieder senkrecht nach oben gefahren. Die Limbach-Mutter (1) kann aus der Ausnehmung (31) der Grundplatte (32) des Werkzeuges (30) entnommen werden.

Fig. 9 zeigt das Werkzeug (30) mit dem Stempel (35). An dem Stempel (35) ist eine Platte (45) befestigt, die die Stifte (38, 39) trägt.

Die Stifte (38, 39) und damit die Stifte (40, 41) sind in der Höhe verstellbar, um gleichmäßige Schweißspitzen in der Limbach-Mutter (1) zu erzeugen. Für die Verstellung ist eine Zylinderschraube (43) vorgesehen, mit deren Hilfe die Platte (45) relativ zu dem Stempel (35) in der Höhe verstellt werden kann, so daß zwischen der Platte (45) und dem Stempel (35) ein Spalt (66) gebildet werden kann.

Damit die Platte (45) sich parallel zu der Platte (35) bewegen kann, sind Zylinderstifte (44) vorgesehen. Zur Fixierung der Platte (45) sind Gegenschrauben (29) angeordnet.

Dadurch, daß die Platte (45) mit ihrem Abstand relativ zu dem Stempel (35) verstellt werden kann, können Schweißspitzen mit unterschiedlichen Tiefen in die Limbach-Mutter (1) eingedrückt werden.

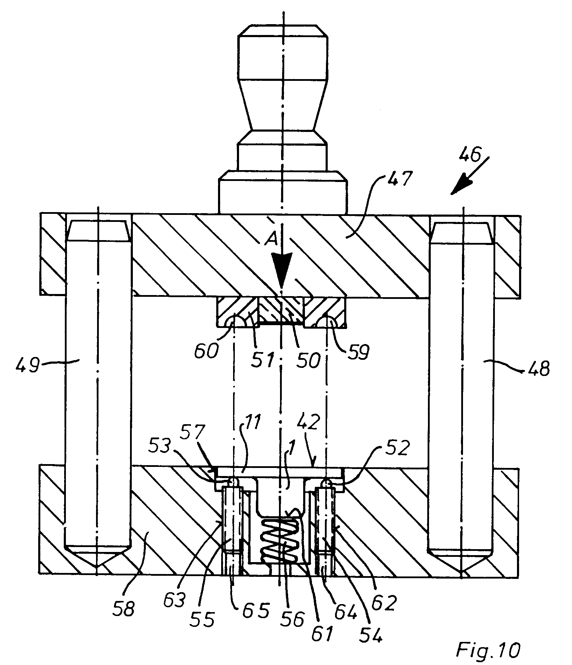

Fig. 10 zeigt ein Werkzeug (46) mit einem Stempel (47), der ein Druckteil (51) trägt.

Der Stempel (47) wird mittels Führungen (48, 49) in Richtung des Pfeiles A nach unten bewegt. Hierbei drückt das Druckteil (51) gegen die Limbach-Mutter (1), die in einer Ausnehmung (57) einer Grundplatte (58) des Werkzeuges (46) liegt. Die Limbach-Mutter (1) liegt mit ihrer Grundfläche (11) auf Stiften (52, 53) auf sowie mit ihrem oberen Ende (61) auf einer Feder (56), die ein Verkanten der Limbach-Mutter verhindert.

Die Stifte (52, 53) werden von Stiften (54, 55) getragen. Die Stifte (54, 55) weisen ein Außengewinde (62, 63) auf. Mittels des Außengewindes (62, 63) können die Stifte (54, 55) in den Öffnungen (64, 65) in der Höhe beliebig verstellt werden.

Der Stempel (47) drückt die Limbach-Mutter (1) mit dem Druckstück (51) gegen die Stifte (52, 53), die in der Höhe exakt gleich ausgerichtet sind.

Nach Ausbilden der Schweißspitzen durch das Durchdrücken des Materiales der Grundfläche (11) der Limbach-Mutter (1), welches durch Ausnehmungen (59, 60) in dem Druckstück (51) ermöglicht wird, wird die Limbach-Mutter durch einen Magneten (50) bei Hochfahren des Stempels entgegen der Richtung des Pfeiles A mit nach oben genommen, so daß die Limbach-Mutter (1) dem Werkzeug (46) einfach entnommen werden kann.

### Bezugszahlen

- 1: Limbach-Mutter
- 2: Öffnung
- 3, 4: Schweißspitzen
- 5: Gewinde
- 6: Werkstück
- 7, 8: Öffnungen
- 9, 10: Schweißbereich
- 11: Grundfläche
- 12, 13: Abbrandteile
- 14: Schweißteil
- 15, 16, 17: Schweißspitzen
- 18, 19, 20: Öffnungen
- 21: Schweißteil
- 22, 23, 24: Schweißspitzen
- 25: Abstandshalter
- 26: Messingeinsatz
- 27: Hülse
- 28: Schrankwand
- 29: Gegenschrauben
- 30: Werkzeug
- 31: Ausnehmung
- 32: Grundplatte
- 33, 34: Öffnungen
- 35: Stempel
- 36, 37: Führung
- 38, 39: Stifte
- 40, 41: Stifte
- 42: Grundseite
- 43: Zylinderschraube
- 44: Zylinderstift
- 45: Platte
- 46: Werkzeug
- 47: Stempel
- 48, 49: Führungen
- 50: Magnet
- 51: Druckstück
- 52, 53: Stifte
- 54, 55: Stifte
- 56: Feder
- 57: Ausnehmung
- 58: Grundplatte
- 59, 60: Öffnungen
- 61: oberes Ende der Limbach-Mutter
- 62, 63: Außengewinde
- 64, 65: Öffnungen
- 66: Spalt
- A: Pfeil

## Patentansprüche

1. Verfahren zum elektrischen Verschweißen von zwei Metallteilen, einem anzuschweißenden Teil und einem Werkstuck, bei dem das anzuschweißende Teil (1) mit wenigstens zwei Schweißspitzen (3, 4) auf das Werkstück aufgelegt wird, und bei dem anschließend der zum Schweißen erforderliche Strom gleichzeitig durch die wenigstens zwei Schweißspitzen (3, 4) fließt, derart, daß die Schweißspitzen (3, 4) in gleichem Maße schmelzen,
**dadurch gekennzeichnet,**
daß das anzuschweißende Teil (1) und das Werkstück (6) durch Hubzündung oder durch Spitzenzündung verschweißt werden.

2. Verfahren nach Anspruch 1, dadurch gekennzeichnet, daß für das Verschweißen der Metallteile eine Spannung von 220 Volt verwendet wird.

3. Verfahren nach Anspruch 1, dadurch gekennzeichnet, daß während des Schweißvorganges ein Anpreßdruck von 20 bis 30 Kilogramm auf das anzuschweißende Teil (1) ausgeübt wird.

4. Verfahren nach Anspruch 1, dadurch gekennzeichnet, daß für das Verschweißen ein Stromfluß von einer Dauer von zwei bis fünf Millisekunden erzeugt wird.

5. Verfahren nach Anspruch 1, dadurch gekennzeichnet, daß das anzuschweißende Teil (1) in einem Messing- oder Kupfereinsatz (26) einer Hülse (27) eines Bolzenschweißgerätes eingelegt wird, und daß durch diesen Messing- oder Kupfereinsatz (26) der für den Schweißvorgang erforderliche Strom geleitet wird.

6. Verfahren nach Anspruch 1, dadurch gekennzeichnet, daß das Verfahren automatisiert in einer CNC-Maschine durchgeführt wird.

7. Verwendung eines Kleinteils zum Verschweißen mit einem Werkstück in dem Verfahren nach Anspruch 1, dadurch gekennzeichnet, daß das Kleinteil (1) wenigstens zwei Schweißspitzen (3, 4) aufweist.

8. Verwendung nach Anspruch 7, dadurch gekennzeichnet, daß die wenigstens zwei Schweißspitzen (3, 4) gleiche Höhen aufweisen.

9. Verwendung nach Anspruch 7, dadurch gekennzeichnet, daß die wenigstens zwei Schweißspitzen (3, 4) gleiche Durchmesser aufweisen.

10. Verwendung nach Anspruch 7, dadurch gekennzeichnet, daß die wenigstens zwei Schweißspitzen (3, 4) eine zylindrische Form aufweisen.

11. Verwendung nach Anspruch 7, dadurch gekennzeichnet, daß die wenigstens zwei Schweißspitzen (3, 4) eine einer Kugelkalotte angenäherte Form aufweisen.

12. Verwendung nach Anspruch 7, dadurch gekennzeichnet, daß die Schweißspitzen (3, 4) eine einem Zylinderstift mit einer Kugelkalotte als Endstück angenäherte Form aufweisen.

13. Verwendung nach Anspruch 7, dadurch gekennzeichnet, daß zwischen den wenigstens zwei Schweißspitzen (3, 4) und dem Kleinteil (1) je ein Abbrandteil (12, 13) vorgesehen ist.

14. Verwendung nach Anspruch 13, dadurch gekennzeichnet, daß das Abbrandteil (12, 13) als Scheibe ausgebildet ist.

15. Verwendung nach Anspruch 13, dadurch gekennzeichnet, daß das Abbrandteil (12, 13) ringförmig ausgebildet ist.

16. Verwendung nach Anspruch 7, dadurch gekennzeichnet, daß das Kleinteil (1) mit seinen Schweißspitzen (3, 4) aus für Strom leitfähigem Material besteht.

17. Verwendung nach Anspruch 16, dadurch gekennzeichnet, daß das Kleinteil (1) aus Stahl besteht.

18. Verwendung nach Anspruch 16, dadurch gekennzeichnet, daß das Kleinteil (1) aus Edelstahl besteht.

19. Verwendung nach Anspruch 16, dadurch gekennzeichnet, daß das Kleinteil (1) aus nichtrostendem Stahl besteht.

20. Verwendung nach Anspruch 16, dadurch gekennzeichnet, daß das Kleinteil (1) aus hitzebeständigem Stahl besteht.

21. Verwendung nach Anspruch 16, dadurch gekennzeichnet, daß das Kleinteil (1) aus Baustahl der ST-Reihe besteht.

22. Verwendung nach Anspruch 16, dadurch gekennzeichnet, daß das Kleinteil (1) galvanisch verkupfert ist.

23. Verwendung nach Anspruch 16, dadurch gekennzeichnet, daß das Kleinteil (1) aus austenitischem Chrom-Nickel-Stahl besteht.

24. Verwendung nach Anspruch 16, dadurch gekennzeichnet, daß das Kleinteil (1) aus Aluminium oder Aluminiumlegierungen besteht.

25. Verwendung nach Anspruch 16, dadurch gekennzeichnet, daß das Kleinteil (1) aus Messing besteht.

26. Verwendung nach Anspruch 16, dadurch gekennzeichnet, daß das Kleinteil (1) aus Messing ohne Bleizulegierung besteht.

27. Verwendung nach Anspruch 16, dadurch gekennzeichnet, daß das Kleinteil (1) aus Kupfer besteht.

28. Verwendung nach Anspruch 16, dadurch gekennzeichnet, daß das Kleinteil (1) aus Kupfer ohne Bleizulegierung besteht.

29. Verwendung nach Anspruch 7, dadurch gekennzeichnet, daß die Schweißspitzen (3, 4) in einem an die Herstellung der Kleinteile (1) sich anschließenden Herstellungsschritt ausgebildet werden.

30. Verwendung nach Anspruch 29, dadurch gekennzeichnet, daß die wenigstens zwei Schweißspitzen (3, 4) mittels eines Stempels (35) herausgedrückt werden.

31. Verwendung nach Anspruch 29, dadurch gekennzeichnet, daß der Stempel (35) wenigstens einen Stift (40, 41) trägt.

32. Verwendung nach Anspruch 31, dadurch gekennzeichnet, daß der wenigstens eine Stift (40, 41) auf den anzuschweißenden Teil des Kleinteiles (1) (11) mit einer Kraft gedrückt wird, daß das Material durch die Grundplatte (11) gedrückt wird, derart, daß das durchgedrückte Material die wenigstens zwei Schweißspitzen (3, 4) bildet.

33. Verwendung nach Anspruch 31, dadurch gekennzeichnet, daS der wenigstens eine Stift (40, 41) nach Durchdrücken der Grundplatte (11) durch die Abbrandteile (12, 13) gedrückt wird.

34. Verwendung nach Anspruch 29, dadurch gekennzeichnet,
- daß das Kleinteil (1) lose auf einer Auflagenfläche (57) aufgelegt wird,
- daß wenigstens zwei Stifte (52, 53) vorgesehen sind, gegen die das Kleinteil (1) mittels eines Stempels (47) gedrückt wird, so daß die Stifte (52, 53) sich in die Grundplatte (11) des Kleinteiles (1) drücken, und
- daß das überschüssige Material auf der den Stiften (52, 53) gegenüberliegenden Seite (42) herausgedrückt wird.

35. Verwendung nach Anspruch 34, dadurch gekennzeichnet, daß das Kleinteil (1) lose auf der Auflagenfläche (57) aufgelegt wird gegen den Druck einer Feder (56).

36. Verwendung nach Anspruch 30, dadurch gekennzeichnet, daß die wenigstens zwei Schweißspitzen (3, 4) aus verdichtetem Material bestehen.

37. Verwendung nach Anspruch 30, dadurch gekennzeichnet, daß die wenigstens zwei Schweißspitzen (3, 4) denselben Lichtbogenwiderstand aufweisen.

## Claims

1. The process of electrical welding of two items is **characterised** by the fact that the process involves a workpiece and an item which is to be welded to it (1), that the item (1) has got at least two welding pins (3,4) and is being put on the workpiece. The current which is necessary for the welding process, flows afterwards at least through two welding pins (3,4) at the same time in the way that the welding pins (3,4) are smelting equally and that the item (1) and the workpiece (6) are being welded to each other by lifting ignition or peak ignition.

2. The process according to claim 1 is characterised by the fact that a currant of 220 volt is being used for the welding of the metal items.

3. The process according to claim 1 is characterised by the fact that during the process of welding a contact pressure of 20 to 30 kilogrammes is being put to the item which is to be welded to another one.

4. The process according to claim 1 is characterised by the fact that a flow of current is being produced for 2 to 5 milliseconds during for the welding process.

5. The process according to claim 1 is characterised by the fact that the item (1) which is to be welded on to another item is being put in an insert made of brass or copper (26) of a sleeve (27) of a welding apparatus for stud welding and that because of the fact that the insert is made of brass or copper (26) the current which is necessary for the welding process is being conducted.

6. The process according to claim 1 is characterised by the fact that the process is being carried out automatically with a CNC-Machine.

7. The use of a small item which is to be welded to the workpiece is in this process according to claim 1 characterised by the fact that the small item (1) has got at least two welding pins (3,4).

8. According to claim 7 the use of the process is characterised by the fact that the minimum amount of two or more welding pins (3,4) are equally in height.

9. According to claim 7 the use of the process is characterised by the fact that the minimum amount of two or more welding pins (3,4) have got the same diameter.

10. According to claim 7 the use of the process is characterised by the fact that the minimum amount of two or more welding pins (3,4) have got the shape of a cylinder.

11. According to claim 7 the use of the process is characterised by the fact that the minimum amount of two or more welding pine (3,4) have got the approximate shape of a calotte.

12. According to claim 7 the use of the process is characterised by the fact that the minimum amount of two or more welding pins (3,4) have got the approximate shape of a parallel cylindrical pin with a calotte at the end.

13. According to claim 7 the use of the process is characterised by the fact that between the minimum amount of two or more welding pins (3,4) and the small item (1) one "burn off-elements" (12,13) at a time is placed in this position.

14. According to claim 13 the use of the process is characterised by the fact that the "burn off-elements" (12,13) are wheel-shaped.

15. According to claim 13 the use of the process is characterised by the fact that the "burn off-elements" (12,13) are ring-shaped.

16. According to claim 7 the use of the process is characterised by the fact that the small item (1) with its welding pins (3,4) is made of electrically conductive material.

17. According to claim 16 the use of the process is characterised by the fact that the small item (1) is made of steel.

18. According to claim 16 the use of the process is characterised by the fact that the small item (1) is made of high-grade steel.

19. According to claim 16 the use of the process is characterised by the fact that the small item (1) is made of stainless steel.

20. According to claim 16 the use of the process is characterised by the fact that the small item (1) is made of heat-resistant steel.

21. According to claim 16 the use of the process is characterised by the fact that the small item (1) is made of structural steel of the ST-series.

22. According to claim 16 the use of the process is characterised by the fact that the small item (1) is coppered galvanically.

23. According to claim 16 the use of the process is characterised by the fact that the small item (1) is made of austenitic chromium-nickel steel.

24. According to claim 16 the use of the process is characterised by the fact that the small item (1) is made of aluminium or an alloy of aluminium.

25. According to claim 16 the use of the process is characterised by the fact that the small item (1) is made of brass.

26. According to claim 16 the use of the process is characterised by the fact that the small item (1) is made of brass without an extra alloy of lead.

27. According to claim 16 the use of the process is characterised by the fact that the small item (1) is made of copper.

28. According to claim 16 the use of the process is characterised by the fact that the small item (1) is made of copper without an extra alloy of lead.

29. According to claim 7 the use of the process is characterised by the fact that the welding pins (3,4) are produced in one step (of the manufacturing technique) after the production of the small item (1).

30. According to claim 29 the use of the process is characterised by the fact that the minimum amount of two or more welding pins (3,4) is being pressed out by means of a stamp (35).

31. According to claim 29 the use of the process is characterized by the fact that the stamp (35) carries at least one pin (40,41).

32. According to claim 31 the use of the process is characterized by the fact that at least one of the pins (40,41) is being pressed against the area of the mounting material (1), so that the material is being pressed through the basic plate (11) in this way that the at least two welding pins (3,4) are being formed.

33. According to claim 31 the use of the process is characterized by the fact that at least one of the pins (40,41) is being pressed through the "burn off-element" (12,13) after the basic plate (11) is being pressed through.

34. According to claim 29 the use of the process is characterised by the fact
- that the mounting material (1) is being put loosely on the surface (57)
- that there are at least two pins (52,53) against which the mounting material (1) is being pressed by means of a stamp (47), so that the pins (52,53) are being pressed into be basic plate (11) of the mounting material (1) and
- that the surplus of material is being pressed out on the opposite side (42).

35. According to claim 34 the use or the process is characterised by the fact that the small item (1) is being put loosely on the surface (57) against the pressure of a spring (56).

36. According to claim 30 the use of the process is characterised by the fact that the minimum amount of two or more welding pins (3,4) are made of compact material.

37. According to claim 30 the use of the process characterised by the fact that the minimum amount of two or more welding pins (3,4) have got the same arc resistance.

## Revendications

1. Processus de soudage électronique de deux pièces de métal, une pièce à fixer par soudage (1) et une pièce à usiner. Il faut poser la première (1) avec au moins deux pointes d'ignition (3, 4) sur la pièce à usiner. Le courant necéssaire pour le soudage traverse les pointes d'ignition (3, 4) en même temps, de façon que la pointes d'ignition (3, 4) fondent de la même manière. Le procédé est marqué par le fait que la pièce à fixer par soudage (1) et la pièce à usiner (6) sont soudées au moyen d'une amorçage de la course ou de la pointe.

2. Procédé selon la spécification 1 marqué par le fait que le soudage des pièces de métal a besoin d'une tension de 220 volts.

3. Procédé selon la spécification 1 marqué par le fait que l'on presse pendant le soudage avec 20 à 30 kilo sur la pièce à fixer par soudage (1).

4. Procédé selon la spécification 1 marqué par le fait que l'on fabrique pour le soudage un courant qui dure entre deux et cinq millisecondes.

5. Procédé selon la spécification 1 marqué par le fait que l'on met la pièce à fixer par soudage (1) dans une enveloppe en laiton ou en cuivre (26) d'une douille (27) d'un appareil à souder à boulon et que le courant necéssaire pour le soudage traverse cette enveloppe en laiton ou en cuivre (26).

6. Procédé selon la spécification 1 marqué par le fait que le procédé, automatisé, est effectué dans une machine CNC.

7. Utilisation d'une pièce miniature (1) pour la souder avec une pièce à usiner dans le procédé selon la spécification 1, marquée par le fait que la pièce miniature (1) a au moins deux pointes d'ignition (3, 4).

8. Utilisation selon la spécification 7, marquée par le fait que les pointes d'ignition (3, 4) ont la même hauteur.

9. Utilisation selon la spécification 7, marquée par le fait que les pointes d'ignition (3, 4) ont des diamètres identiques.

10. Utilisation selon la spécification 7, marquée par le fait que les pointes d'ignition (3, 4) ont des formes cylindriques.

11. Utilisation selon la spécification 7, marquée par le fait que les pointes d'ignition (3, 4) ont des formes pareilles aux calottes sphériques.

12. Utilisation selon la spécification 7, marquée par le fait que les pointes d'ignition (3, 4) ont des formes pareilles à une broche cylindrique dont le bout est une calotte sphérique.

13. Utilisation selon la spécification 7, marquée par le fait que des résidus (12,13) sont prévus entre les pointes d'ignition (3, 4) et la pièce miniature (1).

14. Utilisation selon la spécification 13, marquée par le fait que les résidus (12, 13) sont en forme des disques

15. Utilisation selon la spécification 13, marquée par le fait que les résidus (12, 13) sont en forme des cercles.

16. Utilisation selon la spécification 7, marquée par le fait que la matière de la pièce miniature (1) a ses pointes d'ignition (3, 4) possède la propriété de la conductibilité électrique.

17. Utilisation selon la spécification 16, marquée par le fait que la pièce miniature (1) est d'acier.

18. Utilisation selon la spécification 16, marquée par le fait que la pièce miniature (1) est d'acier spécial.

19. Utilisation selon la spécification 16, marquée par le fait que la pièce miniature (1) est d'acier inoxydable.

20. Utilisation selon la spécification 16, marquée par le fait que la pièce miniature (1) est d'acier réfractaire.

21. Utilisation selon la spécification 16, marquée par le fait que la pièce miniature (1) est d'acier de construction de la série ST.

22. Utilisation selon la spécification 16, marquée par le fait que la pièce miniature (1) est cuivrée galvaniquement.

23. Utilisation selon la spécification 16, marquée par le fait que la pièce miniature (1) est de nichrome austenitique.

24. Utilisation selon la spécification 16, marquée pu le fait que la pièce miniature (1) est d'aluminium ou d'une alliage d'aluminium.

25. Utilisation selon la spécification 16, marquée par le fait que la pièce miniature (1) est de laiton.

26. Utilisation selon la spécification 16, marquée par le fait que la pièce miniature (1) est de laiton sans alliage de plomb.

27. Utilisation selon la spécification 16, marquée par le fait que la pièce miniature (1) est de cuivre.

28. Utilisation selon la spécification 16, marquée par le fait que la pièce miniature (1) est de cuivre sans alliage de plomb.

29. Utilisation selon la spécification 7, marquée par le fait que l'on forme les pointes d'ignition (3, 4) dans un pas de fabrication qui suit la fabrication de la pièce miniature (1).

30. Utilisation selon la spécification 29, marquée par le fait que les pointes d'ignition (3, 4) sortent sous pression d'un piston (35).

31. Utilisation selon la spécification 29, marquée par le fait que le piston (35) a au moins une broche (40, 41).

32. Utilisation selon la spécification 31, marquée par le fait que l'on presse la broche (40, 41) sur la partie à fxer par soudage de la pièce miniature (1) avec une force que la matière est poussée à travers la plaque de base (11), de façon que cette matière forme les pointes d'ignition (3, 4).

33. Utilisation selon la spécification 31, marquée pu le fait que les broches (40, 41), après avoir été pressées à travers la plaque de base (11), sont pressées à travers les résidus (12, 13).

34. Utilisation selon la spécification 29, marquée par le fait...
- ...que la pièce miniature (1) est posée legèrement sur une surface d'appui (57),
- ...qu'il y a prévu au moins deux broches (52, 53) contre desquelles la pièce miniature (1) peut être poussée à l'aide d'un piston (47), si bien que les broches (52, 53) s'introduisent dans la plaque de base (11) de la pièce miniature (1),
- ...que la matière excédentaire sort du côté opposée (42) aux broches (52, 53).

35. Utilisation selon la spécification 34, marquée par le fait que la pièce miniature (1) est posée legèrement sur une surface d'appui (57) contre la pression d'un ressort (56).

36. Utilisation selon la spécification 30, marquée par le fait que les pointes d'ignition (3, 4) sont d'une matière comprimée.

37. Utilisation selon la spécification 30, marquée par le fait que les pointes d'ignition (3, 4) ont la même résistance de soudure à l'arc électrique.
